(19) Europäisches Patentamt
European Patent Office
Office européen des brevets

(11) EP 1 933 623 B1

(12) **EUROPÄISCHE PATENTSCHRIFT**

(45) Veröffentlichungstag und Bekanntmachung des Hinweises auf die Patenterteilung:
**09.09.2009 Patentblatt 2009/37**

(21) Anmeldenummer: **06793900.9**

(22) Anmeldetag: **29.09.2006**

(51) Int Cl.:
***A01N 43/653*** *(2006.01)* ***A01N 37/42*** *(2006.01)*
***A01P 3/00*** *(2006.01)* ***A01P 21/00*** *(2006.01)*

(86) Internationale Anmeldenummer:
**PCT/EP2006/066872**

(87) Internationale Veröffentlichungsnummer:
**WO 2007/042406 (19.04.2007 Gazette 2007/16)**

(54) **FUNGIZIDE UND BIOREGULATORISCHE MISCHUNGEN**
FUNGICIDES AND BIOREGULATORY MIXTURES
MELANGES FONGICIDES ET BIOREGULATEURS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.10.2005 DE 102005048432**

(43) Veröffentlichungstag der Anmeldung:
**25.06.2008 Patentblatt 2008/26**

(73) Patentinhaber: **BASF SE**
**67056 Ludwigshafen (DE)**

(72) Erfinder:
- **SEMAR, Martin**
**76889 Gleiszellen-gleishorbach (DE)**
- **STROBEL, Dieter**
**67273 Herxheim Am Berg (DE)**
- **BRUNS, Jens**
**67435 Neustadt (DE)**
- **STIERL, Reinhard**
**67251 Freinsheim (DE)**
- **WERNER, Frank**
**67434 Neustadt (DE)**

(56) Entgegenhaltungen:
**EP-A- 0 315 850** **EP-A- 0 434 613**
**WO-A-00/78144**

- **BENTON J M ET AL: "THE PLANT GROWTH REGULATOR ACTIVITY OF THE FUNGICIDE, EPOXICONAZOLE, ON GALIUM APARINE L. (CLEAVERS)" PLANT GROWTH REGULATION, DORDRECHT, NL, Bd. 17, Nr. 2, 1995, Seiten 149-155, XP008054431 ISSN: 0167-6903**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 933 623 B1

Printed by Jouve, 75001 PARIS (FR)

## Beschreibung

Die vorliegende Erfindung betrifft fungizide und bioregulatorische Mischungen, enthaltend

(1) Epoxiconazol der Formel I

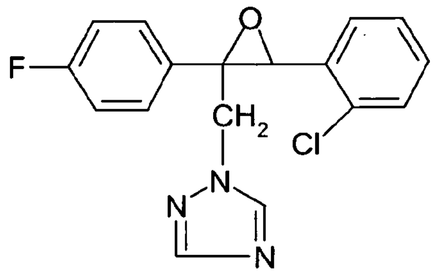

(I)

oder dessen Salze oder Addukte
und
(2) Trinexapac-ethyl der Formel II

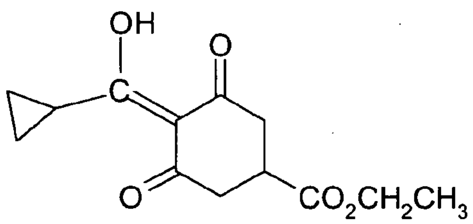

(II)

in einer synergistisch wirksamen Menge.

Außerdem betrifft die Erfindung ein Verfahren zur Bekämpfung von Schadpilzen mit Mischungen der Verbindung I mit der Verbindung II und die Verwendung der Verbindung I mit der Verbindung II zur Herstellung derartiger Mischungen sowie Mittel, die diese Mischungen enthalten.

Außerdem betrifft die Erfindung ein Verfahren zur Regulierung des Wachstums von Pflanzen mit Mischungen der Verbindung I mit der Verbindung II und die Verwendung der Verbindung I mit der Verbindung II zur Herstellung derartiger Mischungen sowie Mittel, die diese Mischungen enthalten.

Epoxiconazol der Formel I und seine Verwendung als Pflanzenschutzmittel ist in der EP-B 0 196 038 beschrieben.

Azole haben neben fungiziden Eigenschaften oft auch wuchs- und wachstumsregulierende Eigenschaften (siehe z.B. EP-A 0 315 850 und J.M. Benton et al, Plant Growth Regulation 17 (2), 149-55 (1995)).

Das Trinexapac-ethyl der Formel II sowie dessen pflanzenwachstumsregulierende Wirkung ist in der EP-A 0 126 713 beschrieben.

Trinexapac-ethyl hat auch resistenzinduzierende Eigenschaften gegen Pflanzenkrankheiten bei einer Anzahl von Pflanzenarten (siehe z.B WO 00/78144 A).

EP-A 0 434613 offenbart synergistische wachstumsregulierende Mischungen, insbesondere zur Erhöhung der Standfestigkeit von Getreide, die neben Trinexapac-ethyl ein Herbizid oder einen weiteren Wachstumsregler enthalten, darunter das wachstumsregulierende Triazolderivat Triapenthenol, das dem Epoxiconazol strukturell ähnlich ist.

Im Hinblick auf eine Senkung der Aufwandmengen und eine Verbreiterung des Wirkungsspektrums der bekannten Verbindungen lagen der vorliegenden Erfindung Mischungen als Aufgabe zugrunde, die bei verringerter Gesamtmenge an ausgebrachten Wirkstoffen eine verbesserte Wirkung gegen Schadpilze, insbesondere für bestimmte Indikationen, zeigen.

Demgemäss wurden die eingangs definierten Mischungen gefunden. Es wurde außerdem gefunden, dass sich bei gleichzeitiger gemeinsamer oder getrennter Anwendung der Verbindung I und eines Wirkstoffs II oder bei Anwendung der Verbindung I und eines Wirkstoffs II nacheinander Schadpilze besser bekämpfen lassen als mit den Einzelverbindungen (synergistische Mischungen). Die Verbindung I lässt sich als Synergist für eine Vielzahl verschiedener Wirkstoffe

verwenden. Durch gleichzeitige gemeinsame oder getrennte Anwendung der Verbindung I mit einem Wirkstoff II wird die fungizide Wirksamkeit in überadditivem Maße erhöht.

Das Epoxiconazol der Formel I

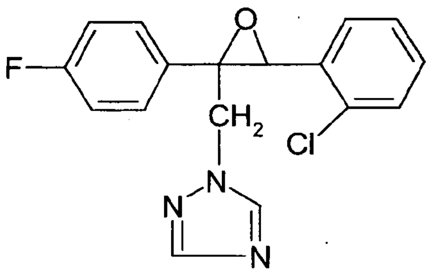

(I)

ist aus der EP-B 0 196 038 bekannt.

Das Trinexapac-ethyl der Formel II

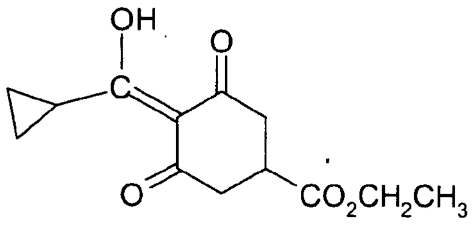

(II)

ist in der EP-A 0 126 713 beschrieben.

Die Verbindung I ist wegen des basischen Charakters der in ihr enthaltenen Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oderdisulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Die Mischungen der Verbindung I und eines Wirkstoffs II, bzw. die gleichzeitige gemeinsame oder getrennte Verwendung der Verbindung I und eines Wirkstoffs II zeichnen sich aus durch eine hervorragende Wirksamkeit gegen ein breites Spektrum von pflanzenpathogenen Pilzen, insbesondere aus der Klasse der Ascomyceten, Deuteromyceten, Peronosporomyceten (syn. Oomyceten) und Basidiomyceten. Sie sind zum Teil systemisch wirksam und können im Pflanzenschutz als Beiz, Blatt- und Bodenfungizide eingesetzt werden.

Besondere Bedeutung haben sie für die Bekämpfung einer Vielzahl von Pilzen an verschiedenen Kulturpflanzen wie Bananen, Baumwolle, Gemüsepflanzen (z.B. Gurken, Bohnen und Kürbisse), Gerste, Gras, Hafer, Kaffee, Kartoffeln, Mais, Obstpflanzen, Reis, Roggen, Soja, Tomaten, Wein, Weizen, Zierpflanzen, Zuckerrohr und einer Vielzahl von Samen.

Speziell eignen sie sich zur Bekämpfung folgender Pflanzenkrankheiten:

- Alternaria Arten an Gemüse, Raps, Zuckerrüben und Obst und Reis , wie z.B. A.solani oder A. alternata an Kartoffeln und Tomaten
- Aphanomyces Arten an Zuckerrüben und Gemüse
- Ascochyta-Arten an Getreide and Gemüse
- Bipolaris- und Drechslera Arten an Mais, Getreide, Reis und Rasen, wie z.B. D.maydis an Mais
- Blumeria graminis (Echter Mehltau) an Getreide,
- Botrytis cinerea (Grauschimmel) an Erdbeeren, Gemüse, Blumen und Weinreben,
- Bremia lactucae an Salat
- Cercospora Arten an Mais, Sojabohnen, Reis und Zuckerrüben
- Cochliobolus Arten an Mais , Getreide, Reis, wie z.B. Cochliobolus sativus an Getreide, Cochliobolus miyabeanus an Reis
- Colletotricum Arten an Sojabohnen und Baumwolle
- Drechslera Arten, Pyrenophora Arten an Mais, Getreide, Reis und Rasen, wie z.B. D.teres an Gerste oder D. tritici-repentis an Weizen
- Esca an Weinrebe, verursacht durch Phaeoacremonium chlamydosporium, Ph. Aleophilum, und Formitipora punctata (syn. Phellinus punctatus)
- Elsinoe ampelina an Weinrebe,
- Exserohilum Arten an Mais
- Erysiphe cichoracearum und Sphaerotheca fuliginea an Gurkengewächsen,
- Fusarium und Verticillium Arten an verschiedenen Pflanzen wie z.B. F. graminearum oder F. culmorum an Getreide oder F. oxysporum an einer Vielzahl von Pflanzen wie z.B. Tomaten
- Gaeumanomyces graminis an Getreide
- Gibberella arten an Getreide und Reis (z.B.. Gibberella fujikuroi an Reis)
- Glomerella cingulata an Weinrebe und anderen Pflanzen
- Grainstaining complex an Reis
- Guignardia budwelli an Wenrebe
- Helminthosporium Arten an Mais und Reis
- Isariopsis clavispora an Weinrebe,
- Michrodochium nivale an Getreide
- Mycosphaerella Arten an Getreide, Bananen und Erdnüssen, wie z.B. M. graminicola an Weizen oder M.fijiensis an Bananen
- Peronospora-Arten an Kohl und Zwiebelgewächsen, wie z.B. P. brassicae an Kohl oder P. destructor an Zwiebel
- Phakopsara pachyrhizi und Phakopsara meibomiae an Sojabohnen
- Phomopsis Arten an Sojabohnen und Sonnenblumen, P. viticola an Weinrebe
- Phytophthora infestans an Kartoffeln und Tomaten,
- Phytophthora Arten an verschiedenen Pflanzen wie z.B. P.capsici an Paprika,
- Plasmopara viticola an Weinreben,
- Podosphaera leucotricha an Apfel,
- Pseudocercosporella herpotrichoides an Getreide,
- Pseudoperonospora an verschiedenen Pflanzen wie z.B. P. cubensis an Gurke oder P. humili an Hopfen
- Pseudopezicula tracheiphilai an Weinrebe,
- Puccinia Arten an verschiedenen Pflanzen wie z.B. P. triticina, P. striformins, P. hordei oder P.graminis an Getreide, oder P. asparagi an Spargel
- Pyricularia oryzae , Corticium sasakii , Sarocladium oryzae, S.attenuatum, Entyloma oryzae, an Reis,
- Pyricularia grisea an Rasen und Getreide
- Pythium spp. an Rasen, Reis, Mais, Baumwolle, Raps, Sonnenblumen, Zuckerrüben, Gemüse und anderen Pflanzen wie z.B. P.ultiumum an verschiedenen Pflanzen, P. aphanidermatum an Rasen
- Rhizoctonia-Arten an Baumwolle, Reis, Kartoffeln, Rasen, Mais, Raps, Kartoffeln, Zuckerrüben, Gemüse und an verschiedenen Pflanzen wie z.B. R.solani an Rüben und verschiedenen Pflanzen,
- Rhynchosporium secalis an Gerste, Roggen und Triticale
- Sclerotinia Arten an Raps und Sonnenblumen
- Septoria tritici und Stagonospora nodorum an Weizen,
- Erysiphe (syn. Uncinula) necator an Weinrebe
- Setospaeria Arten an Mais und Rasen
- Sphacelotheca reilinia an Mais
- Thievaliopsis Arten an Sojabohnen und Baumwolle
- Tilletia Arten an Getreide
- Ustilago-Arten an Getreide, Mais und Zuckerrohr, wie z.B. U. maydis an Mais

- Venturia-Arten (Schorf) an Äpfeln und Birnen wie. z.B. V. inaequalis an Apfel.

Die Mischungen der Verbindung I und eines Wirkstoffs II eignen sich besonders zur Bekämpfung von Schadpilzen aus der Klasse der Peronosporomycetes (syn. Oomyceten), wie Peronospora-Arten, Phytophthora-Arten, Plasmopara viticola und Pseudoperonospora-Arten, insbesondere der entsprechenden voranstehend genannten.

Die Mischungen der Verbindung I und II eignen sich außerdem zur Bekämpfung von Schadpilzen im Materialschutz (z.B. Holz, Papier, Dispersionen für den Anstrich, Fasern bzw. Gewebe) und im Vorratsschutz. Im Holzschutz finden insbesondere folgende Schadpilze Beachtung: Ascomyceten wie Ophiostoma spp., Ceratocystis spp., Aureobasidium pullulans, Sclerophoma spp., Chaetomium spp., Humicola spp., Petriella spp., Trichurus spp.; Basidiomyceten wie Coniophora spp., Coriolus spp., Gloeophyllum spp., Lentinus spp., Pleurotus spp., Poria spp., Serpula spp. und Tyromyces spp., Deuteromyceten wie Aspergillus spp., Cladosporium spp., Penicillium spp., Trichoderma spp., Alternaria spp., Paecilomyces spp. und Zygomyceten wie Mucor spp., darüber hinaus im Materialschutz folgende Hefepilze: Candida spp. und Saccharomyces cerevisae.

Die Verbindung I wird angewendet, indem man die Pilze oder die vor Pilzbefall zu schützenden Pflanzen, Saatgüter, Materialien oder den Erdboden mit einer fungizid wirksamen Menge der Wirkstoffe behandelt. Die Anwendung kann sowohl vor als auch nach der Infektion der Materialien, Pflanzen oder Samen durch die Pilze erfolgen.

Die Verbindung I und Wirkstoff II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Mischungen aus der Verbindung I mit dem Wirkstoff II, bzw. die gleichzeitige gemeinsame oder getrennte Verwendung einer Verbindung I mit Wirkstoff II, zeichnen sich auch aus durch eine hervorragende bioregulatorische Wirkung an verschiedenen Kulturpflanzen wie Bananen, Baumwolle, Gemüsepflanzen (z.B. Gurken, Bohnen, Tomaten und Kürbisgewächse), Gerste, Gras, Hafer, Kaffee, Kartoffeln, Mais, Obstpflanzen, Reis, Roggen, Soja, Wein, Weizen, Zierpflanzen, Zuckerrohr sowie an einer Vielzahl von Samen.

Gegenstand der vorliegenden Erfindung ist auch die Verwendung der erfindungsgemäßen Mischungen als Bioregulator bei einer Reihe verschiedenartiger Anwendungsmöglichkeiten, beispielsweise im Pflanzenanbau, z.B. in der Landwirtschaft und im Gartenbau.

Bioregulatorische Wirkstoffe können z.B. das Pflanzenwachstum beeinflussen (Wachstumsregulatoren).

Eine bioregulatorische Anwendung ist z.B. die Beeinflussung des oberirdischen Pflanzenlängenwachstums (wuchs- oder wachstumsregulatorisch). Es können praktisch alle Entwicklungsstadien einer Pflanze erfasst werden.

So lässt sich beispielsweise das vegetative Sprosswachstum der Pflanzen stark hemmen, was sich insbesondere in einer Reduzierung des Längenwachstums äußert. Die behandelten Pflanzen weisen demgemäß einen gedrungenen Wuchs auf; außerdem ist eine dunklere Blattfärbung zu beobachten. Als vorteilhaft für die Praxis erweist sich eine verminderte Intensität des Wachstums von Gräsern an Straßenrändern, Hecken, Kanalböschungen und auf Rasenflächen wie Park-, Sport- und Obstanlagen, Zierrasen und Flugplätzen, so dass der arbeits- und kostenaufwendige Rasenschnitt reduziert werden kann. Auch bei vielen Zierpflanzenarten ist ein kompakterer Wuchs wünschenswert.

Von wirtschaftlichem Interesse ist auch die Erhöhung der Standfestigkeit von lageranfälligen Kulturen wie Getreide, Mais, Raps und Sonnenblumen. Die dabei verursachte Verkürzung und Verstärkung der Sprossachse verringert oder beseitigt die Gefahr des "Lagerns" (des Umknickens) von Pflanzen unter ungünstigen Witterungsbedingungen vor der Ernte. Wichtig ist auch die wachstumsregulatorische Anwendung zur Hemmung des Längenwachstums und zur zeitlichen Veränderung des Reifeverlaufs bei Baumwolle. Damit wird ein vollständig mechanisiertes Beernten dieser Kulturpflanze ermöglicht. Bei Obst- und anderen Bäumen lassen sich mittels Wachstumsregulation Schnittkosten einsparen. Gleichzeitig wird ein günstigeres Verhältnis zwischen vegetativem Wachstum und Fruchtbildung erzielt. Außerdem kann die Alternanz von Obstbäumen durch Wachstumsregulation gebrochen werden. Durch die wachstumsregulatorische Anwendung kann auch die seitliche Verzweigung der Pflanzen vermehrt oder gehemmt werden. Daran besteht Interesse, wenn z.B. bei Tabakpflanzen die Ausbildung von Seitentrieben (Geiztrieben) zugunsten des Blattwachstums gehemmt werden soll.

Auch lässt sich beispielsweise bei Winterraps die Frostresistenz durch Wachstumsregulation erheblich erhöhen. Dabei werden die jungen Rapspflanzen nach der Aussaat und vor dem Einsetzen der Winterfröste trotz günstiger Wachstumsbedingungen in der vegetativen Entwicklung zurückgehalten. Das Längenwachstum und die Entwicklung einer zu üppigen (und dadurch besonders frostanfälligen) Blatt- bzw. Pflanzenmasse werden gehemmt. Dadurch wird auch die Frostgefährdung solcher Pflanzen verringert, die zum vorzeitigen Abbau der Blühhemmung und zum Übergang in die generative Phase neigen. Auch bei anderen Kulturen, z.B. Wintergetreide ist es vorteilhaft, wenn die Bestände durch wachstumsregulatorische Behandlung im Herbst zwar gut bestockt werden, aber nicht zu üppig in den Winter hineingehen. Dadurch kann der erhöhten Frostempfindlichkeit und - wegen der relativ geringen Blatt- bzw. Pflanzenmasse - auch dem Befall mit verschiedenen Krankheiten (z.B. Pilzkrankheit) vorgebeugt werden. Die Hemmung des vegetativen Wachstums ermöglicht außerdem bei vielen Kulturpflanzen eine dichtere Bepflanzung des Bodens, so dass ein Mehrertrag bezogen auf die Bodenfläche erzielt werden kann.

Außerdem lassen sich durch Wachstumsregulation Mehrerträge sowohl an Pflanzenteilen als auch an Pflanzeninhaltsstoffen erzielen. So ist es beispielsweise möglich, das Wachstum größerer Mengen an Knospen, Blüten, Blättern, Früchten, Samenkörnern, Wurzeln und Knollen zu induzieren, den Gehalt an Zucker in Zuckerrüben, Zuckerrohr sowie Zitrusfrüchten zu erhöhen, den Proteingehalt in Getreide oder Soja zu steigern oder Gummibäume zum vermehrten Latexfluß zu stimulieren. Dabei können die Wirkstoffe Ertragssteigerungen durch Eingriffe in den pflanzlichen Stoffwechsel bzw. durch Förderung oder Hemmung des vegetativen und/oder des generativen Wachstums verursachen. Durch Pflanzenwachstumsregulation lassen sich schließlich sowohl eine Verkürzung bzw. Verlängerung der Entwicklungsstadien als auch eine Beschleunigung bzw. Verzögerung der Reife der geernteten Pflanzenteile vor oder nach der Ernte erreichen.

Von wirtschaftlichem Interesse ist beispielsweise die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- bzw. Blatt- und Sprossteil der Pflanze ist auch für ein gut kontrolliertes Entblättern von Nutzpflanzen wie beispielsweise Baumwolle wesentlich.

Durch die Wachstumsregulation kann weiterhin der Wasserverbrauch von Pflanzen reduziert werden. Dies ist besonders wichtig für landwirtschaftliche Nutzflächen, die unter einem hohen Kostenaufwand künstlich bewässert werden müssen, z.B. in ariden oder semiariden Gebieten. Durch die wachstumsregulatorische Anwendung lässt sich die Intensität der Bewässerung reduzieren und damit eine kostengünstigere Bewirtschaftung durchführen. Unter dem Einfluß von Wachstumsregulatoren kann es zu einer besseren Ausnutzung des vorhandenen Wassers kommen, weil u. a. die Öffnungsweite der Stomata reduziert wird, eine dickere Epidermis und Cuticula ausgebildet werden, die Durchwurzelung des Bodens verbessert wird, die transpirierende Blattoberfläche reduziert wird, oder das Mikroklima im Kulturpflanzenbestand durch einen kompakteren Wuchs günstig beeinflusst wird.

Für Zierpflanzen, vor allem für Obstbäume und insbesondere für Raps ist die erfindungsgemäße Anwendung von besonderer Bedeutung.

Die Verwendung der erfindungsgemäßen Mischung als Bioregulator zeigt bei einer Reihe verschiedenartiger Anwendungsmöglichkeiten im Pflanzenanbau, sowohl in der Landwirtschaft als auch im Gartenbau, Vorteile gegenüber den Einzelwirkstoffen. Insbesondere können die an sich zur Bioregulation erforderlichen Aufwandmengen an einzelnen Wirkstoffen im Rahmen der erfindungsgemäßen kombinierten Anwendung reduziert werden. Überdies liefern vorteilhafte und besonders ausgewählte Hilfsmittelzugaben darüber hinaus vielfach bessere biologische Eigenschaften als die Summenwirkung der Einzelkomponenten im Tankmixverfahren.

Ein besonderer Gegenstand der vorliegenden Erfindung ist die Verwendung der erfindungsgemäßen Mischung als Bioregulator zur Verbesserung des Wurzelwachstums. Zweck dieser Verwendung ist vor allem die Ausbildung einer erhöhten Anzahl an Wurzelsträngen, längerer Wurzeln und/oder einer erhöhten Wurzeloberfläche. Dadurch wird das Aneignungsvermögen der Pflanzen für Wasser und Nährstoffe verbessert. Dies bringt Vorteile insbesondere bei leichten, z.B. sandigen Böden, und/oder bei Niederschlagsmangel. Im Herbst wird insbesondere bei Winterraps eine größere Speicherwurzel ausgebildet, so dass im Frühjahr das neue Wachstum intensiver erfolgen kann. Das verbesserte Wurzelsystem sorgt im Frühjahr für eine festere Verankerung des Sprosses im Boden, so dass die Pflanzen deutlich standfester sind. Bei anderen Pflanzen repräsentiert die Speicherwurzel ganz oder zum großen Teil das zu erntende Pflanzenorgan (z.B. andere Brassicaceen, wie Rettich und Radieschen, aber auch Zuckerrüben, Möhren oder Chicoree).

Die Verbesserung des Wurzelwachstums ist insbesondere dann von Vorteil, wenn dies bei gleichzeitiger Reduktion des vegetativen Wachstums, also insbesondere unter Hemmung des Sprosslängenwachstums (Einkürzung) und/oder unter Reduktion der Blatt- bzw. Pflanzenmasse erfolgt. Demnach richtet sich die vorliegende Verwendung vorteilhafterweise auf eine Verringerung des Quotienten aus Sprossmasse zu Wurzelmasse.

Diese auf die Wurzelausbildung gerichtete Anwendung erfolgt insbesondere im Getreideanbau, z.B. für Weizen, Gerste, Hafer und Roggen sowie Mais und Reis, und ganz besonders bei Pflanzen, die Speicherwurzeln ausbilden, wie Brassicaceen, z.B. Rettich und Radieschen, vor allem Raps und insbesondere Winterraps, und Zuckerrüben, Möhren oder Chicoree. In diesem Zusammenhang ist insbesondere der Rapsbau zu nennen, wo die Verbesserung des Wurzelwachstums besonders deutlich zum Tragen kommt. Praktisch kann diese auf die Wurzelausbildung gerichtete Anwendung besondere Bedeutung bei bestimmten Gegebenheiten erlangen, z.B. bei relativ trockenen Böden und/oder während der Phase, in der die Pflanze das Wurzelsystem ausbildet. Bei gleichzeitiger Reduktion des Sprosslängenwachstums ergeben sich durch das verbesserte Wurzelwachstum besondere Vorteile.

Die Verbindung I mit dem Wirkstoff II können gleichzeitig, und zwar gemeinsam oder getrennt, oder nacheinander aufgebracht werden, wobei die Reihenfolge bei getrennter Applikation im allgemeinen keine Auswirkung auf die fungizide sowie bioregulatorische Wirkung hat.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder weitere wachstumsregulierende Wirkstoffe oder Düngemittel beimischen kann.

Üblicherweise kommen Mischungen aus Verbindung I und dem Wirkstoff II zur Anwendung. Unter Umständen

können jedoch auch Mischungen der Verbindung I mit zwei oder ggf. mehreren Aktivkomponenten vorteilhaft sein.

Die Verbindung I und der Wirkstoff II werden üblicherweise in einem Gewichtsverhältnis von 100:1 bis 1:100, vorzugsweise 20:1 bis 1:20, insbesondere 10:1 bis 1:10 angewandt.

Die weiteren Aktivkomponenten werden gewünschtenfalls im Verhältnis von 20:1 bis 1:20 zu der Verbindung I zugemischt.

Die Aufwandmengen der erfindungsgemäßen Mischungen liegen, vor allem bei landwirtschaftlichen Kulturflächen, je nach Art der Verbindung und des gewünschten Effekts bei 5 g/ha bis 1750 g/ha, vorzugsweise 10 bis 1250 g/ha, insbesondere 20 bis 800 g/ha.

Die Aufwandmengen für die Verbindung I liegen entsprechend in der Regel bei 1 bis 1000 g/ha, vorzugsweise 10 bis 750 g/ha, insbesondere 20 bis 500 g/ha.

Die Aufwandmengen für den Wirkstoff II liegen entsprechend in der Regel bei 1 bis 750 g/ha, vorzugsweise 1 bis 500 g/ha, insbesondere 1 bis 300 g/ha.

Bei der Saatgutbehandlung werden im allgemeinen Aufwandmengen an Mischung von 1 bis 1000 g/100 kg Saatgut, vorzugsweise 1 bis 750 g/100 kg, insbesondere 5 bis 500 g/100 kg verwendet.

Das Verfahren zur Bekämpfung von Schadpilzen sowie zur Regulierung des Wachstums von Pflanzen erfolgt durch die getrennte oder gemeinsame Applikation von Verbindung I und Wirkstoffs II oder einer Mischung aus Verbindung I und Wirkstoffs 11 durch Besprühen oder Bestäuben der Samen, der Pflanzen oder der Böden vor oder nach der Aussaat der Pflanzen oder vor oder nach dem Auflaufen der Pflanzen.

Die erfindungsgemäßen Mischungen, bzw. die Verbindung I und der Wirkstoff II können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht. Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.-%, vorzugsweise zwischen 0,1 und

90 Gew.-% der Wirkstoffe. Die Wirkstoffe werden dabei in einer Reinheit von 90% bis 100%, vorzugsweise 95% bis 100% (nach NMR-Spektrum) eingesetzt.

Beispiele für Formulierungen sind: 1. Produkte zur Verdünnung in Wasser

A) Wasserlösliche Konzentrate (SL)
10 Gew.-Teile einer erfindungsgemäßen Verbindung werden mit 90 Gew.-Teilen Wasser oder einem wasserlöslichen Lösungsmittel gelöst. Alternativ werden Netzmittel oder andere Hilfsmittel zugefügt. Bei der Verdünnung in Wasser löst sich der Wirkstoff. Man erhält auf diese Weise eine Formulierung mit einem Wirkstoffgehalt von 10 Gew.-%.

B) Dispergierbare Konzentrate (DC)
20 Gew.-Teile einer erfindungsgemäßen Verbindung werden in 70 Gew.-Teilen Cyclohexanon unter Zusatz von 10 Gew.-Teilen eines Dispergiermittels z.B. Polyvinylpyrrolidon gelöst. Bei Verdünnung in Wasser ergibt sich eine Dispersion. Der Wirkstoffgehalt beträgt 20 Gew.-%

C) Emulgierbare Konzentrate (EC)
15 Gew.-Teile einer erfindungsgemäßen Verbindung werden in 75 Gew.-Teilen Xylol unter Zusatz von Ca-Dodecylbenzolsulfonat und Ricinusölethoxylat (jeweils 5 Gew.-Teile) gelöst. Bei der Verdünnung in Wasser ergibt sich eine Emulsion. Die Formulierung hat einen Wirkstoffgehalt von 15 Gew.-%.

D) Emulsionen (EW, EO)
25 Gew.-Teile einer erfindungsgemäßen Verbindung werden in 35 Gew.-Teilen Xylol unter Zusatz von Ca-Dodecylbenzolsulfonat und Ricinusölethoxylat (jeweils 5 Gew.-Teile) gelöst. Diese Mischung wird mittels einer Emulgiermaschine (z.B. Ultraturax) in 30 Gew. Teile Wasser gegeben und zu einer homogenen Emulsion gebracht. Bei der Verdünnung in Wasser ergibt sich eine Emulsion. Die Formulierung hat einen Wirkstoffgehalt von 25 Gew.-%.

E) Suspensionen (SC, OD)
20 Gew.-Teile einer erfindungsgemäßen Verbindung werden unter Zusatz von 10 Gew.-Teilen Dispergier- und Netzmitteln und 70 Gew.-Teilen Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs. Der Wirkstoffgehalt in der Formulierung beträgt 20 Gew.-%.

F) Wasserdispergierbare und wasserlösliche Granulate (WG, SG)
50 Gew.-Teile einer erfindungsgemäßen Verbindung werden unter Zusatz von 50 Gew-Teilen Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs. Die Formulierung hat einen Wirkstoffgehalt von 50 Gew.-%.

G) Wasserdispergierbare und wasserlösliche Pulver (WP, SP)
75 Gew.-Teile einer erfindungsgemäßen Verbindung werden unter Zusatz von 25 Gew.-Teilen Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs. Der Wirkstoffgehalt der Formulierung beträgt 75 Gew.-%.

2. Produkte für die Direktapplikation

H) Stäube (DP)
5 Gew.-Teile einer erfindungsgemäßen Verbindung werden fein gemahlen und mit 95 Gew.-Teilen feinteiligem Kaolin innig vermischt. Man erhält dadurch ein Stäubemittel mit einem Wirkstoffgehalt von 5 Gew.-%.

J) Granulate (GR, FG, GG, MG)
0,5 Gew-Teile einer erfindungsgemäßen Verbindung werden fein gemahlen und mit 99,5 Gew.-Teilen Trägerstoffe verbunden. Gängige Verfahren sind dabei die Extrusion, die Sprühtrocknung oder die Wirbelschicht. Man erhält dadurch ein Granulat für die Direktapplikation mit einem Wirkstoffgehalt von 0,5 Gew.-%.

K) ULV- Lösungen (UL)

10 Gew.-Teile einer erfindungsgemäßen Verbindung werden in 90 Gew.-Teilen eines organischen Lösungsmittel z.B. Xylol gelöst. Dadurch erhält man ein Produkt für die Direktapplikation mit einem Wirkstoffgehalt von 10 Gew.-%.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, gegebenenfalls auch erst unmittelbar vor der Anwendung (Tankmix), zugesetzt werden. Diese Mittel werden üblicherweise zu den erfindungsgemäßen Mitteln im Gewichtsverhältnis 1:100 bis 100:1, bevorzugt 1:10 bis 10:1, zugemischt.

Die Verbindungen I und II, bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Die fungizide Wirkung der Einzelverbindungen und der erfindungsgemäßen Mischungen ließ sich durch die folgenden Versuche zeigen.

Die Wirkstoffe wurden getrennt oder gemeinsam als eine Stammlösung aufbereitet mit 25 mg Wirkstoff, welcher mit einem Gemisch aus Aceton und/oder Dimethylsulfoxid und dem Emulgator Uniperol® EL (Netzmittel mit Emulgier- und Dispergierwirkung auf der Basis ethoxylierter Alkylphenole) im Volumen-Verhältnis Lösungsmittel-Emulgator von 99 zu 1 ad 10 ml aufgefüllt wurde. Anschließend wurde ad 100 ml mit Wasser aufgefüllt. Diese Stammlösung wurde mit dem beschriebenen Lösungsmittel-Emulgator-Wasser Gemisch zu der unten angegeben Wirkstoffkonzentration verdünnt. Die visuell ermittelten Werte für den Prozentanteil befallener Blattflächen bzw. das gemessene Längenwachstum wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen bzw. das Längenwachstum demjenigen der unbehandelten Kontrollpflanzen; bei einem Wirkungsgrad von 100 weisen die behandelten Pflanzen keinen Befall auf bzw. hätten die behandelten Pflanzen kein Längenwachstum gezeigt.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Anwendungsbeispiel 1 - Kurative Wirksamkeit gegen Weizenbraunrost verursacht durch Puccinia recondita (Puccrt K1)

Blätter von in Töpfen gewachsenen Weizensämlingen der Sorte "Kanzler" wurden mit einer Sporensuspension des Braunrostes (Puccinia recondita) inokuliert. Danach wurden die Töpfe für 24 Stunden in eine Kammer mit hoher Luftfeuchtigkeit (90 bis 95 %) und 20 bis 22°C gestellt. Während dieser Zeit keimten die Sporen aus und die Keimschläuche drangen in das Blattgewebe ein. Die infizierten Pflanzen wurden am nächsten Tag mit der oben beschriebenen Wirkstofflösung in der unten angegebenen Wirkstoffkonzentration bis zur Tropfnässe besprüht. Nach dem Antrocknen des Spritzbelages wurden die Versuchspflanzen im Gewächshausbei Temperaturen zwischen 20 und 22°C und 65 bis 70 % relativer Luftfeuchte für 7 Tage kultiviert. Dann wurde das Ausmaß der Rostpilzentwicklung auf den Blättern ermittelt. Die visuell ermittelten Werte für den Prozentanteil befallener Blattfläche wurde zunächst gemittelt, dann in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Der Wirkstoff Epoxiconazol wurde als handelsübliche Formulierung eingesetzt.

PUCCRT K1

| Wirkstoff/-Wirkstoffkombination | Konz. (mg/ml) | Verhältnis | Beobachtete Wirkung (%) | Berechnete Wirkung nach Colby (%) | Synergismus | Höhe des Synergismus (%) |
|---|---|---|---|---|---|---|
| Epoxiconazol | 0.25 | | 11 | | | |
| Trinexapac-ethyl | 1 | | 0 | | | |
| | 0.06 | | 0 | | | |
| Epoxiconazol + Trinexapac-ethyl | 0.25<br>0.06 | 4:1 | 56 | 11 | Ja | 45 |
| Epoxiconazol + Trinexapac-ethyl | 0.25<br>1 | 1:4 | 67 | 11 | Ja | 56 |

Anwendungsbeispiel 2 - Wirksamkeit gegen Weizenmehltau verursacht durch Erysiphe [syn. Blumeria] graminis forma specialis. tritici (Erysgt P1)

Blätter von in Töpfen gewachsenen Weizenkeimlingen wurden mit wässriger Suspension in der unten angegebenen Wirkstoffkonzentration bis zur Tropf-nässe besprüht. Die Suspension oder Emulsion wurde wie oben beschrieben hergestellt. 24 Stunden nach dem Antrocknen des Spritzbelages mit Sporen des Weizenmehltaus (Erysiphe [syn. Blumeria] graminis forma specialis. tritici) bestäubt. Die Versuchspflanzen wurden anschließend im Gewächshaus bei Temperaturen zwischen 20 und 24°C und 60 bis 90 % relativer Luftfeuchtigkeit aufgestellt. Nach 7 Tagen wurde das Ausmaß der Mehltauentwicklung visuell in % Befall der gesamten Blattfläche ermittelt.
Die visuell ermittelten Werte für den Prozentanteil befallener Blattfläche wurde zunächst gemittelt, dann in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

ERYSGT P1

| Wirkstoff/-Wirkstoffkombination | Konz. (mg/ml) | Verhältnis | Beobachtete Wirkung (%) | Berechnete Wirkung nach Colby (%) | Synergismus | Höhe des Synergismus (%) |
|---|---|---|---|---|---|---|
| Epoxiconazol | 1 | | 33 | | | |
| Trinexapac-ethyl | 4 | | 0 | | | |
| | 1 | | 0 | | | |
| Epoxiconazol + Trinexapac-ethyl | 1<br>1 | 1:1 | 67 | 33 | Ja | 34 |
| Epoxiconazol + Trinexapac-ethyl | 1<br>4 | 1 :4 | 72 | 33 | Ja | 39 |

**Patentansprüche**

**1.** Fungizide und bioregulatorische Mischung, enthaltend

(1) Epoxiconazol der Formel I,

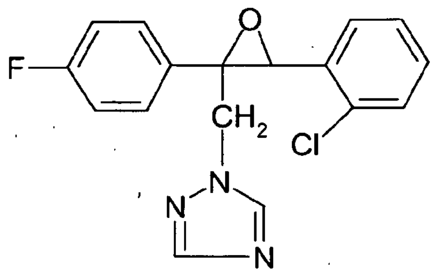

(I)

oder dessen Salze oder Addukte
und
(2) Trinexapac-ethyl der Formel II

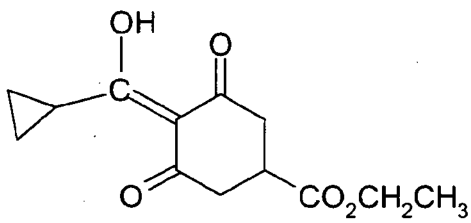

(II)

in einer synergistisch wirksamen Menge.

**2.** Fungizide und bioregulatorische Mischung nach Anspruch 1, **dadurch gekennzeichnet, dass** das Gewichtsverhältnis von Epoxiconazol der Formel I zu Trinexapac-ethyl der Formel II 100 : 1 bis 1: 100 beträgt.

**3.** Verfahren zur Bekämpfung von pflanzenpathogenen Schadpilzen, **dadurch gekennzeichnet, dass** man die Schadpilze, deren Lebensraum oder die vor ihnen zu schützenden Pflanzen, den Boden oder Saatgüter mit der fungiziden Mischung gemäß Anspruch 1 behandelt.

**4.** Verfahren zur Regulierung des Wachstums von Pflanzen, **dadurch gekennzeichnet, dass** man die Pflanzen, den Boden oder Saatgüter mit der bioregulatorischen Mischung gemäß Anspruch 1 behandelt.

**5.** Verfahren nach Anspruch 3 oder 4, **dadurch gekennzeichnet, dass** man Epoxiconazol der Formel I gemäß Anspruch 1 und Trinexapac-ethyl der Formel II gemäß Anspruch 1 gleichzeitig, und zwar gemeinsam oder getrennt, oder nacheinander ausbringt.

**6.** Verfahren nach Anspruch 3, 4 oder 5, **dadurch gekennzeichnet, dass** man die fungizide und bioregulatorische Mischung oder Epoxiconazol der Formel I mit Trinexapac-ethyl der Formel II gemäß Anspruch 1 in einer Menge von 5 g/ha bis 1750 g/ha aufwendet.

**7.** Verfahren nach Anspruch 3, 4 oder 5, **dadurch gekennzeichnet, dass** man die Verbindungen I und II gemäß Anspruch 1 oder die Mischung gemäß Anspruch 1 in einer Menge von 1 g bis 1000 g pro 100 kg Saatgut anwendet.

**8.** Saatgut, enthaltend die Mischung gemäß Anspruch 1 in einer Menge von 1 g bis 1000 g pro 100 kg.

**9.** Verwendung der Verbindungen I und II gemäß Anspruch 1 zur Herstellung eines zur Bekämpfung von Schadpilzen geeigneten Mittels.

**10.** Verwendung der Verbindungen I und II gemäß Anspruch 1 zur Herstellung eines zur Regulierung des Wachstums von Pflanzen geeigneten Mittels.

**11.** Fungizide Mittel, enthaltend die fungizide Mischung gemäß Anspruch 1 sowie einen festen oder flüssigen Träger.

**12.** Bioregulatorische Mittel, enthaltend die Mischung gemäß Anspruch 1 sowie einen festen oder flüssigen Träger.

## Claims

**1.** A fungicidal and bioregulatory mixture, comprising

(1) epoxiconazole of the formula I

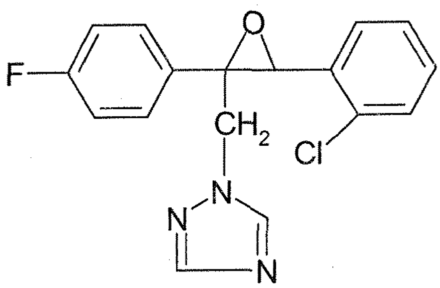

(I)

or salts or adducts thereof
and
(2) trinexapac-ethyl of the formula II

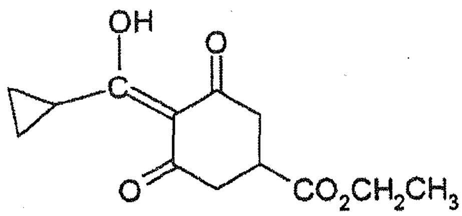

(II)

in a synergistically effective amount.

2. The fungicidal and bioregulatory mixture according to claim 1, wherein the weight ratio of epoxiconazole of the formula I to trinexapac-ethyl of the formula II is from 100 : 1 to 1 : 100.

3. A method for controlling phytopathogenic harmful fungi, which comprises treating the harmful fungi, their habitat or the plants, the soil or seed to be protected against them with the fungicidal mixture according to claim 1.

4. A method for regulating the growth of plants, which comprises treating the plants, the soil or seed with the bioregulatory mixture according to claim 1.

5. The method according to claim 3 or 4, wherein epoxiconazole of the formula I according to claim 1 and trinexapac-ethyl of the formula II according to claim 1 are applied simultaneously, that is jointly or separately, or in succession.

6. The method according to claim 3, 4 or 5, wherein the fungicidal and bioregulatory mixture or epoxiconazole of the formula I with trinexapac-ethyl of the formula II according to claim 1 are applied in an amount of from 5 g/ha to 1750 g/ha.

7. The method according to claim 3, 4 or 5, wherein the compounds I and II according to claim 1 or the mixture according to claim 1 are applied in an amount from 1 g to 1000 g per 100 kg of seed.

8. Seed, comprising the mixture according to claim 1 in an amount of from 1 g to 1000 g per 100 kg.

9. The use of the compounds I and II according to claim 1 for preparing a composition suitable for controlling harmful fungi.

10. The use of the compounds I and II according to claim 1 for preparing a composition suitable for regulating the growth of plants.

11. A fungicidal composition, comprising the fungicidal mixture according to claim 1 and a solid or liquid carrier.

12. A bioregulatory composition, comprising the mixture according to claim 1 and a solid or liquid carrier.

## Revendications

1. Mélange fongicide et biorégulateur, contenant

(1) de l'époxiconazole de formule

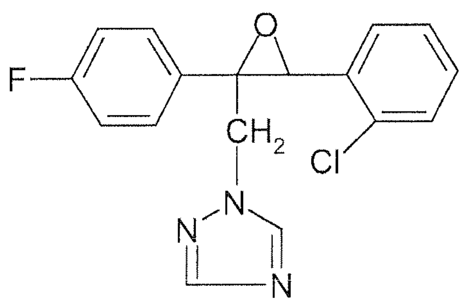

(I)

ou ses sels ou adduits
et
(2) du trinexapac-éthyle de formule II

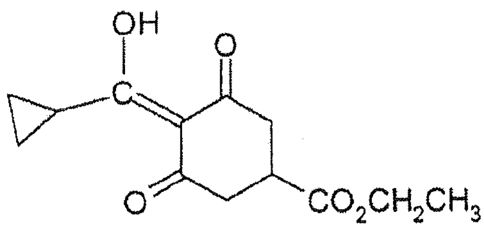

(II)

en une quantité à effet synergique.

2. Mélange fongicide et biorégulateur selon la revendication 1, **caractérisé en ce que** le rapport pondéral de l'époxiconazole de formule I au trinexapac-éthyle de formule II va de 100:1 à 1:100.

3. Procédé pour la lutte contre des champignons nuisibles phytopathogènes, **caractérisé en ce qu'**on traite par le mélange fongicide selon la revendication 1 les champignons nuisibles, leur habitat ou les plantes, le sol ou les semences, à protéger contre eux.

4. Procédé pour la régulation de la croissance de plantes, **caractérisé en ce qu'**on traite les plantes, le sol ou les semences par le mélange biorégulateur selon la revendication 1.

5. Procédé selon la revendication 3 ou 4, **caractérisé en ce qu'**on applique simultanément, à savoir ensemble ou séparément, ou successivement l'époxiconazole de formule I selon la revendication 1 et le trinexapac-éthyle de formule II selon la revendication 1.

6. Procédé selon la revendication 3, 4 ou 5, **caractérisé en ce qu'**on applique en une quantité de 5 g/ha à 1 750 g/ha le mélange fongicide et biorégulateur ou l'époxiconazole de formule I avec le trinexapac-éthyle de formule II selon la revendication 1.

7. Procédé selon la revendication 3, 4 ou 5, **caractérisé en ce qu'**on applique en une quantité de 1 g à 1 000 g pour 100 kg de semences les composés I et II selon la revendication 1 ou le mélange selon la revendication 1.

8. Semences, contenant le mélange selon la revendication 1, en une quantité de 1 g à 1 000 g pour 100 kg.

9. Utilisation des composés I et II selon la revendication 1, pour la préparation d'une composition appropriée à la lutte contre des champignons nuisibles.

10. Utilisation des composés I et II selon la revendication 1, pour la préparation d'une composition appropriée à la régulation de la croissance de plantes.

11. Compositions fongicides, contenant le mélange fongicide selon la revendication 1 ainsi qu'un support solide ou liquide.

12. Compositions biorégulatrices, contenant le mélange selon la revendication 1, ainsi qu'un support solide ou liquide.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0196038 B
- EP 0315850 A
- EP 0126713 A
- WO 0078144 A
- EP 0434613 A


### In der Beschreibung aufgeführte Nicht-Patentliteratur


- **J.M. Benton et al.** *Plant Growth Regulation,* 1995, vol. 17 (2), 149-55
- **Colby, S. R.** Calculating synergistic and antagonistic responses of herbicide Combinations. *Weeds,* 1967, vol. 15, 20-22